# EUROPEAN PATENT SPECIFICATION

(11) **EP 3 208 117 B1**
(45) Date of publication and mention of the grant of the patent: **19.12.2018**
(21) Application number: 15851245.9
(22) Date of filing: 29.09.2015
(51) Int. Cl.: B60C 19/12, B29C 73/16, B60C 5/01, B60C 5/00, B29D 30/06

(54) **PNEUMATIC TIRE**
LUFTREIFEN
PNEUMATIQUE

(30) Priority: 15.10.2014 JP 2014210640
(43) Date of publication of application: 23.08.2017
(73) Proprietor: Bridgestone Corporation, Tokyo 104-8340 (JP)
(72) Inventor: KON, Seiji, Tokyo 104-8340 (JP); KOUNO, Yoshihide, Tokyo 104-8340 (JP)
(74) Representative: Oxley, Robin John George
(86) International application number: PCT/JP2015/077614
(87) International publication number: WO 2016/059970

(56) References cited:
- EP-A1- 2 133 219
- EP-A1- 2 468 489
- WO-A1-2014/129427
- JP-A- S53 503
- JP-A- H08 323 875
- JP-A- S61 146 608
- JP-A- 2007 152 789
- JP-A- 2009 269 446
- JP-A- 2011 037 399
- US-A- 6 106 647

## Description

### Technical Field

The present invention relates to a pneumatic tire in which a tire frame member is formed using a resin material.

### Background Art

The use of thermoplastic resins, thermoplastic elastomers, and the like as tire materials has been proposed from the perspectives of weight reduction and facilitating recycling. For example, Patent Document 1 describes a pneumatic tire in which a tire body is molded from a thermoplastic polymer material (see, for example, Japanese Patent Application Laid-Open (JP-A) No. H03-143701).

### SUMMARY OF INVENTION

### Technical Problem

In pneumatic tires molded from thermoplastic polymer materials, such as that described in JP-A No. H03-143701, a sealing layer can be provided in order to prevent punctures. However, it is difficult to provide such a sealing layer at a desired position on an inner circumferential surface of a tire, and ingenuity is required.

Reference is also made to EP 2133219 A1, which discloses a pneumatic tire including a puncture-resistant layer and JP H08-323875 A, which discloses a manufacture of a tire provided with a seal liquid layer.

In consideration of the above circumstances, an object of the present invention is to provide a pneumatic tire in which a sealing layer can be provided at a desired position on an inner circumferential surface of the tire.

### Solution to Problem

A pneumatic tire according to a first aspect includes a tire frame member formed in a circular shape and made of a resin, and a sealing layer provided by fixing a sealant housing member, which is internally filled with a sealant, to an inner circumferential surface of the tire frame member, characterized in that the resin is a thermoplastic resin or a thermoplastic elastomer.

According to the above configuration, the sealing layer is provided by fixing the sealant housing member internally filled with the sealant to the inner circumferential surface of the tire frame member. The sealing layer can accordingly be provided at a desired position on the inner circumferential surface of the tire, and the sealant does not flow out of the sealant housing member.

Note that "fixing the sealant housing member internally filled with the sealant to the inner circumferential surface of the tire frame member" encompasses both cases in which the sealant housing member is fixed to the inner circumferential surface of the tire frame member after the sealant housing member has been filled with the sealant, and cases in which the sealant housing member is filled with the sealant after fixing the sealant housing member to the inner circumferential surface of the tire frame member.

A pneumatic tire according to a second aspect is the pneumatic tire of the first aspect, wherein the sealant housing member is adhered to the inner circumferential surface of the tire frame member by thermal welding.

According to the above configuration, the sealant housing member is adhered to the inner circumferential surface of the tire frame member by thermal welding. This thereby enables the sealing layer to be reliably provided at the desired position on the inner circumferential surface of the tire using a simple method.

A pneumatic tire according to a third aspect is the pneumatic tire of the first aspect, further including an attachment portion that is provided at the inner circumferential surface of the tire frame member and to which the sealant housing member is attached.

According to the above configuration, the attachment portion is provided to the inner circumferential surface of the tire frame member, and the sealant housing member is attached to the attachment portion. This thereby enables the sealing layer to be reliably provided at the desired position on the inner circumferential surface of the tire using a simple method.

A pneumatic tire according to a fourth aspect is the pneumatic tire of any one of the first aspect to the third aspect, wherein the tire frame member includes a bead portion covering a bead core, a side portion extending from the bead portion toward a radial direction outer side of the tire, and a crown portion extending from the side portion toward a width direction inner side of the tire. The sealant housing member is fixed to at least an inner circumferential surface of the side portion of the tire frame member.

According to the above configuration, the sealant housing member is fixed to the side portion of the tire frame member. The sealing layer can accordingly be provided to the side portion of the tire, where it is generally difficult to provide a sealing layer, thereby enabling the likelihood of the side portion sustaining a puncture to be reduced.

### Advantageous Effects of Invention

The present invention is capable of providing a pneumatic tire in which a sealing layer can be provided at a desired position on the inner circumferential surface of the tire.

### BRIEF DESCRIPTION OF DRAWINGS

Fig. 1 is a perspective cross-section view illustrating part of a pneumatic tire according to a first exemplary embodiment of the present invention.
Fig. 2 is a cross-section view, illustrating one side of a pneumatic tire according to the first exemplary embodiment of the present invention in cross-section taken along a tire axial direction.
Fig. 3 is a perspective cross-section view illustrating part of a pneumatic tire according to a second exemplary embodiment of the present invention.
Fig. 4 is a cross-section view, illustrating one side of a pneumatic tire according to the second exemplary embodiment of the present invention in cross-section taken along a tire axial direction.

### DESCRIPTION OF EMBODIMENTS

### First Exemplary Embodiment

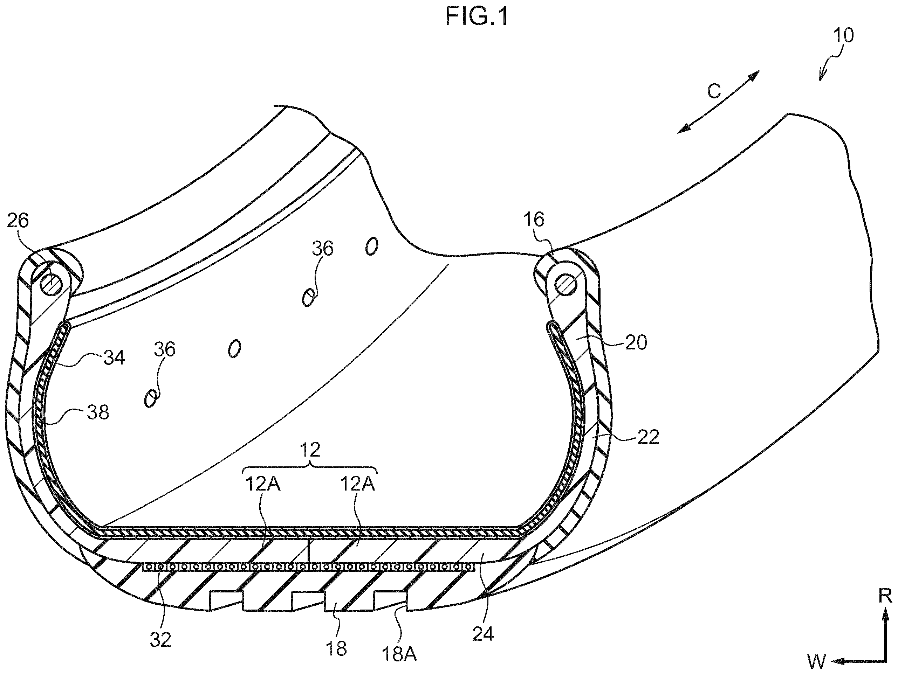

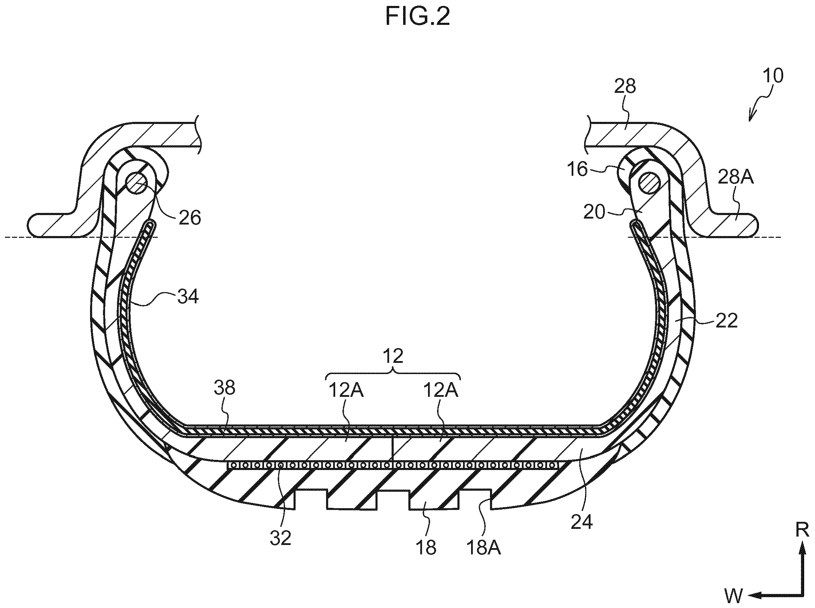

Explanation follows regarding a first exemplary embodiment of the present invention, with reference to Fig. 1 and Fig. 2. In the drawings, the arrow W indicates a direction parallel to the rotational axis of the tire (this is referred to below as the tire width direction), and the arrow R indicates a direction passing through the rotational axis of the tire and running orthogonal to the tire width direction (this is referred to below as the tire radial direction).

The arrow C indicates a circular circumferential direction centered on the rotational axis of the tire (this is referred to below as the tire circumferential direction). Note that a radial direction is a direction orthogonal to the tire circumferential direction, and is a direction including components in both the tire radial direction and the tire width direction.

As illustrated in Fig. 1 and Fig. 2, a pneumatic tire 10 according to the first exemplary embodiment includes a tire frame member 12, rubber covering layers 16, and a tread rubber 18.

The tire frame member 12 includes a pair of bead portions 20, a pair of side portions 22 respectively extending from the pair of bead portions 20 toward the tire radial direction outside, and a crown portion 24 extending from the side portions 22 toward the tire width direction inside.

Note that the bead portions 20 refer to portions spanning from tire radial direction inside ends of the tire frame member 12 to as far as 30% of the tire cross-sectional height, and the crown portion 24 refers to a portion where the tread rubber 18 is disposed.

The tire frame member 12 is a circular member molded from a resin material, and is formed by bonding together a pair of tire pieces 12A in the tire axial direction. The pair of tire pieces 12A are, for example, bonded together at a tire width direction central portion of the crown portion 24 by a welding method in which a hot plate is inserted between tire width direction inside end portions of the tire pieces 12A, and the hot plate is then removed while pushing together the facing end portions in approaching directions.

Note that the pair of tire pieces 12A may be bonded together by an adhesion method using an adhesive. Moreover, the pair of tire pieces 12A may be coupled together by providing a resin bonding member at a tire width direction central portion of the crown portion 24, and bonding the tire pieces 12A to both side faces of the bonding member.

Moreover, the tire frame member 12 may be formed from a single member, or the tire frame member 12 may be formed by bonding three or more members together.

A thermoplastic resin or a thermoplastic elastomer (TPE) is employed as the resin material configuring the tire frame member 12. A thermoplastic elastomer is preferably employed in consideration of elasticity while traveling and moldability during manufacture. Note that the entire tire frame member 12 may be formed of the above resin material, or a portion of the tire frame member 12 may be formed of the above resin material.

Thermoplastic polyolefin-based elastomers (TPO), thermoplastic polystyrene-based elastomers (TPS), thermoplastic polyamide-based elastomers (TPA), thermoplastic polyurethane-based elastomers (TPU), thermoplastic polyester-based elastomers (TPC), dynamically crosslinked-type thermoplastic elastomers (TPV), or the like may be employed as thermoplastic elastomers.

Moreover, examples of thermoplastic resins include polyurethane resins, polyolefin resins, vinyl chloride resins, and polyamide resins. A thermoplastic resin material having, for example, the characteristics of a deflection temperature under load (when loaded at 0.45 MPa) as defined by ISO 75-2 or ASTM D648 of 78°C or greater, a tensile yield strength as defined by JIS K7113 of 10 MPa or greater, a tensile elongation at break, also defined by JIS K7113, of 50% or greater, and a Vicat softening temperature (method A) as defined by JIS K7206 of 130°C or greater may be employed.

A bead core 26 is embedded in each of the bead portions 20 of the tire frame member 12. Metals, organic fibers, resin-coated organic fibers, hard resins, and the like may be employed as the material configuring the bead core 26. Note that the bead core 26 may be omitted in cases in which the rigidity of the bead portions 20 is secured and there are no issues with fitting to the rim 28 illustrated in Fig. 2.

A pair of the rubber covering layers 16 are provided on outer circumferential surfaces of the tire frame member 12. The rubber covering layers 16 extend from the respective bead portions 20 to the tire width direction outsides of the crown portion 24 in the tire frame member 12. The material configuring the rubber covering layer 16 may employ the same type of rubber as employed in rubber pneumatic tires hitherto.

Note that tire radial direction inside end portions of the rubber covering layers 16 extend as far as inner circumferential surfaces of the respective bead portions 20 of the tire frame member 12. A belt layer 32 is provided on an outer circumferential surface of the crown portion 24. The belt layer 32 is, for example, configured by winding a resin-coated cord in the tire circumferential direction in a spiral shape.

The tread rubber 18 is disposed at the tire radial direction outside of the crown portion 24 and the belt layer 32. Note that the rubber covering layers 16, the belt layer 32, the tread rubber 18, and the tire frame member 12 are adhered together by vulcanization after being stacked.

The tread rubber 18 is formed from a rubber having superior anti-wear characteristics to the resin material from which the tire frame member 12 is formed, and may employ tread rubber of a similar type to that employed in rubber pneumatic tires hitherto.

A tread face of the tread rubber 18 is formed with water-expelling grooves 18A extending in the tire circumferential direction. In the present exemplary embodiment, three of the grooves 18A are formed; however, there is no limitation thereto, and a greater number of the grooves 18A may be formed. The grooves 18A may employ a known tread pattern.

A sealant housing member 34 that extends from an inner circumferential surface of one of the side portions 22 of the tire frame member 12 and across an inner circumferential surface of the crown portion 24 to reach an inner circumferential surface of the other side portion 22 is fixed to an inner circumferential surface of the tire frame member 12.

The sealant housing member 34 is a bag-shaped member configured from a thermoplastic resin, for example. The sealant housing member 34 is formed in communication around the entire tire circumferential direction. Moreover, as illustrated in Fig. 1, the sealant housing member 34 is provided with plural filling holes 36 for filling the sealant housing member 34 with a sealant 38.

As illustrated in Fig. 2, tire radial direction inside end portions of the sealant housing member 34 are disposed so as to be positioned further to the tire radial direction inside than tire radial direction outside end portions of rim flanges 28A of the rim 28.

The sealant housing member 34 is filled with the sealant 38 as a sealing layer. The sealant 38 may employ a liquid repair agent to close up a puncture hole in the event that the pneumatic tire 10 is pierced by a nail or the like and sustains a puncture hole. Generally, a latex such as a natural rubber latex or a synthetic rubber latex is employed for this.

Next, explanation follows regarding operation and advantageous effects of the pneumatic tire 10 according to the present exemplary embodiment.

In order to provide the sealing layer to the pneumatic tire 10 as described above, after bonding the tire pieces 12A together to form the tire frame member 12, the sealant housing member 34 is adhered to the inner circumferential surface of the tire frame member 12 by thermal welding.

The sealant housing member 34 is then filled with the sealant 38 through the plural filling holes 36. After filling, the filling holes 36 are blocked off by the sealant 38. Note that after filling the sealant housing member 34 with the sealant 38, the filling holes 36 may also be blocked off using thermal welding. The filling holes 36 may also be provided with check valves.

In the pneumatic tire 10 according to the present exemplary embodiment, the sealant housing member 34 is adhered to the inner circumferential surface of the tire frame member 12, and the sealing layer is provided by filling the sealant housing member 34 with the sealant 38.

Since the sealant 38 is filled into the sealant housing member 34, the sealant 38 does not flow out from the sealant housing member 34 even when subjected to centrifugal force during rotation of the pneumatic tire 10. Moreover, there is little concern of the sealant 38 becoming uneven within the sealant housing member 34. The sealing layer can accordingly be provided at a desired position at the inner circumferential surface of the pneumatic tire 10.

Moreover, the sealant housing member 34 is formed in communication around the entire tire circumferential direction. Namely, since the sealing layer is provided continuously around the entire tire circumferential direction, a puncture hole is accordingly filled by the sealant 38 irrespective of the position at which the puncture hole occurs in the tire circumferential direction.

Moreover, sealing layers are generally formed by pouring a sealant onto an inner circumferential surface of a tire, and it is therefore difficult to provide the sealing layer at side portions. However, in the pneumatic tire 10 according to the present exemplary embodiment, the sealant housing member 34 is fixed in place from one of the side portions 22 to the other side portion 22 of the tire frame member 12. This thereby enables the sealing layer to be provided to the side portions 22 as well.

Moreover, the sealant housing member 34 is disposed further to the tire radial direction inside than the end portions of the rim flanges 28A of the rim 28. Portions where the bead portions 20 of the tire frame member 12 are fitted to the rim 28 are protected by the rim 28. Accordingly, providing the sealing layer as far as a portion further to the tire radial direction inside than the end portions of the rim flanges 28A eliminates a portion that is neither protected by the rim 28 nor provided with the sealing layer, facilitating puncture prevention at a portion of the pneumatic tire 10 that would otherwise be unprotected. Note that the tire radial direction inside end portions of the sealant housing member 34 may be configured at the same position as the position of the end portions of the rim flanges 28A.

Moreover, the sealing layer is provided by adhering the sealant housing member 34 to the inner circumferential surface of the tire frame member 12 by thermal welding. There is therefore no concern of a drop in the rigidity of the tire frame member 12, and the sealing layer can be reliably provided using a simple method.

### Second Exemplary Embodiment

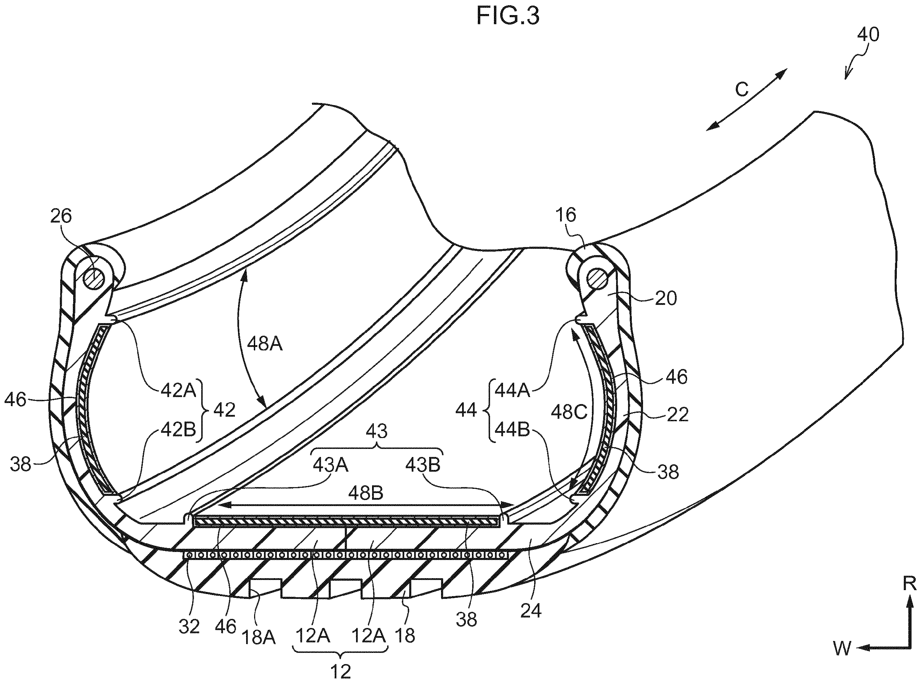

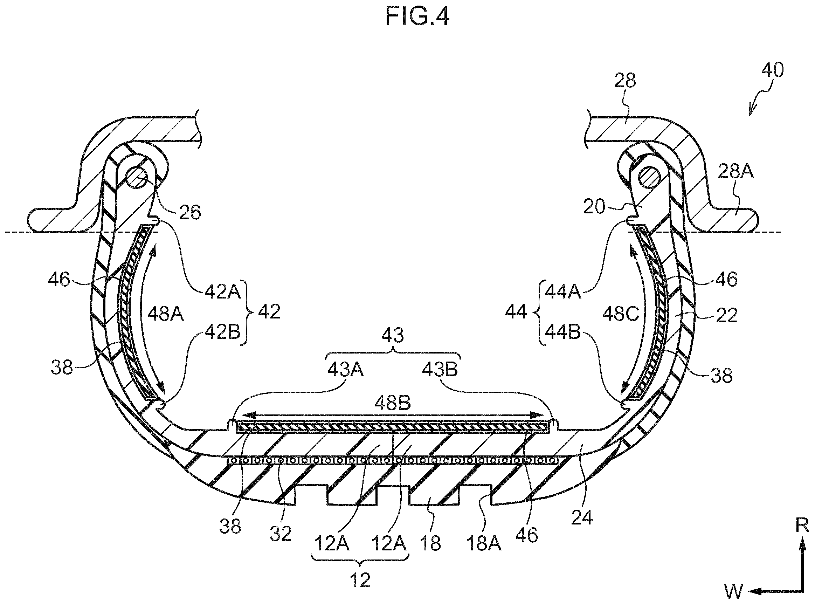

Next, explanation follows regarding a second exemplary embodiment of the present invention, with reference to Fig. 3 and Fig. 4. Note that configuration the same as that of the first exemplary embodiment is allocated the same reference numerals, and explanation thereof is omitted.

In a pneumatic tire 40 of the second exemplary embodiment, respective pairs of projecting first projecting walls 42A, 42B, second projecting walls 43A, 43B, and third projecting walls 44A, 44B are formed spaced apart from each other in the radial direction at the inner circumferential surfaces of the pair of side portions 22 and at the inner circumferential surface of the crown portion 24 of the tire frame member 12.

The first projecting walls 42A, 42B, the second projecting walls 43A, 43B, and the third projecting walls 44A, 44B are made of resin, similarly to the tire frame member 12, and are each integrally molded to the tire frame member 12. Note that the first projecting walls 42A, 42B, the second projecting walls 43A, 43B, and the third projecting walls 44A, 44B may also be adhered to the tire frame member 12 by thermal welding.

Moreover, the first projecting walls 42A, 42B, the second projecting walls 43A, 43B, and the third projecting walls 44A, 44B respectively configure a first attachment portion 42, a second attachment portion 43, and a third attachment portion 44, each serving as an attachment portion.

Note that as illustrated in Fig. 4, tire radial direction inside end portions of the first attachment portion 42 and the third attachment portion 44, namely the first projecting wall 42A and the third projecting wall 44A, are disposed at a position further to the tire radial direction inside than the tire radial direction outside end portions of the rim flanges 28A of the rim 28.

Moreover, each of the first attachment portion 42, the second attachment portion 43, and the third attachment portion 44 is formed in communication around the entire tire circumferential direction, and the first attachment portion 42, the second attachment portion 43, and the third attachment portion 44 demarcate attachment regions 48A, 48B, 48C.

Respective sealant housing members 46 are attached to the attachment regions 48A, 48B, 48C, and the sealant housing members 46 are filled with the sealant 38.

Next, explanation follows regarding operation and advantageous effects of the pneumatic tire 40 according to the present exemplary embodiment.

In order to provide the pneumatic tire 40 with the sealing layer described above, first, the projecting first projecting walls 42A, 42B, the second projecting walls 43A, 43B, and the third projecting walls 44A, 44B are integrally molded to the inner circumferential surfaces of the tire pieces 12A during injection molding of the tire pieces 12A of the tire frame member 12.

The tire pieces 12A are then bonded together to form the tire frame member 12 provided with the first attachment portion 42, the second attachment portion 43, and the third attachment portion 44. Then, the sealant housing members 46 that have been filled with the sealant 38 in advance are fitted into and fixed to the first attachment portion 42, the second attachment portion 43, and the third attachment portion 44.

In the pneumatic tire 40 according to the present exemplary embodiment the first attachment portion 42, the second attachment portion 43, and the third attachment portion 44 are formed to the inner circumferential surface of the tire frame member 12, and the sealing layer is provided by fitting the sealant housing members 46 into the first attachment portion 42, the second attachment portion 43, and the third attachment portion 44.

Since the sealant housing members 46 are fitted into the first attachment portion 42, the second attachment portion 43, and the third attachment portion 44, there is no concern of the sealant housing members 46 slipping even when subjected to centrifugal force during rotation of the pneumatic tire 40. The sealing layer can accordingly be provided at desired positions on the inner circumferential surface of the pneumatic tire 40.

Moreover, the sealing layer is provided by attaching the sealant housing members 46 to the first attachment portion 42, the second attachment portion 43, and the third attachment portion 44. There is therefore no concern of a drop in the rigidity of the tire frame member 12, and the sealing layer can be reliably provided using a simple method.

Moreover, the side portions 22 of the tire frame member 12 are formed with the attachment regions 48A and 48C for the sealant housing members 46. Accordingly, the sealing layer can also be provided to the side portions 22 of the tire frame member 12 of the pneumatic tire 40, these being locations where it is generally difficult to provide a sealing layer.

Moreover, the tire radial direction inside end portions of the first attachment portion 42 and the third attachment portion 44 are disposed further to the tire radial direction inside than the end portions of the rim flanges 28A of the rim 28. Forming the attachment regions 48A and 48C of the sealant housing members 46 as far as a portion further to the tire radial direction inside than the end portions of the rim flanges 28A eliminates a portion that is neither protected by the rim 28 nor provided with the sealing layer, facilitating puncture prevention at a portion of the pneumatic tire 40 that would otherwise be unprotected. Note that the tire radial direction inside end portions of the first attachment portion 42 and the third attachment portion 44 may be configured at the same position as the position of the end portions of the rim flanges 28A.

### Other Exemplary Embodiments

Note that the present invention has been explained using the exemplary embodiments as examples. However, exemplary embodiments of the present invention are not limited thereto, and various other exemplary embodiments may be implemented within the scope of the present invention.

For example, in the second exemplary embodiment, three of the attachment portions, namely the first attachment portion 42, the second attachment portion 43, and the third attachment portion 44, are formed in the radial direction. However, there may be any number of the attachment portions. Moreover, the attachment portions may be formed at freely selected positions. For example, attachment portions may be formed only at the inner circumferential surface of the side portions 22 of the tire frame member 12, or an attachment portion may be formed only at the inner circumferential surface of the crown portion 24.

Moreover, in the first exemplary embodiment, the sealant housing member 34 is formed in communication around the entire tire circumferential direction. However, plural of the sealant housing members 34 may be formed spaced apart around the tire circumferential direction. Similarly, plural of each of the first attachment portion 42, the second attachment portion 43, and the third attachment portion 44 of the second exemplary embodiment may be formed spaced apart around the tire circumferential direction.

Moreover, in the first exemplary embodiment, the sealant housing member 34 is adhered to the inner circumferential surface of the tire frame member 12 by thermal welding. However, the sealant housing member 34 may be adhered to the inner circumferential surface of the tire frame member 12 using an adhesive or the like.

Moreover, the first exemplary embodiment and the second exemplary embodiment described above may be combined as appropriate. For example, similarly to in the second exemplary embodiment, in the first exemplary embodiment a sealant housing member 34 that has been filled with the sealant 38 in advance may be adhered to the tire frame member.

Moreover, similarly to in the first exemplary embodiment, in the second exemplary embodiment the sealant housing members 46 may be filled with the sealant 38 after fitting the sealant housing members 46 into the first attachment portion 42, the second attachment portion 43, and the third attachment portion 44.

## Claims

1. A pneumatic tire (10, 40), comprising:
a tire frame member (12) formed in a circular shape and made of a resin; and
a sealing layer provided by fixing a sealant housing member (34, 46), which is internally filled with a sealant (38), to an inner circumferential surface of the tire frame member (12), **characterized in that**
the resin is a thermoplastic resin or a thermoplastic elastomer.

2. The pneumatic tire (10, 40) of claim 1, further comprising an attachment portion (42, 43, 44) that is provided at the inner circumferential surface of the tire frame member (12) and to which the sealant housing member (34, 46) is attached.

3. The pneumatic tire (10, 40) of claim 1 or claim 2, wherein:
the tire frame member (12) includes a bead portion (20) covering a bead core (26), a side portion (22) extending from the bead portion (20) toward a radial direction outer side of the tire, and a crown portion (24) extending from the side portion (22) toward a width direction inner side of the tire; and
the sealant housing member (34, 46) is fixed to at least an inner circumferential surface of the side portion (22) of the tire frame member (12).

## Patentansprüche

1. Luftreifen (10, 40) umfassend:
ein Reifenrahmenelement (12), das in einer kreisförmigen Form ausgebildet ist und aus einem Harz besteht; und
eine Dichtungsschicht, die durch Befestigen eines Dichtungsmittelaufnahmeelements (34, 46), das innen mit einem Dichtungsmittel (38) gefüllt ist, an einer Innenumfangsfläche des Reifenrahmenelements (12) bereitgestellt wird, **dadurch gekennzeichnet, dass**
das Harz ein thermoplastisches Harz oder ein thermoplastisches Elastomer ist.

2. Luftreifen (10, 40) nach Anspruch 1, ferner umfassend einen Befestigungsabschnitt (42, 43, 44), der an der Innenumfangsfläche des Reifenrahmenelements (12) bereitgestellt ist und an dem das Dichtungsmittelaufnahmeelement (34, 46) befestigt ist.

3. Luftreifen (10, 40) nach Anspruch 1 oder Anspruch 2, wobei:
das Reifenrahmenelement (12) einen Wulstabschnitt (20), der einen Wulstkern (26) bedeckt, einen Seitenabschnitt (22), der sich von dem Wulstabschnitt (20) zu einer in Radialrichtung äußeren Seite des Reifens hin erstreckt, und einen Scheitelabschnitt (24) einschließt, der sich von dem Seitenabschnitt (22) zu einer in Breitenrichtung inneren Seite des Reifens hin erstreckt; und
das Dichtungsmittelaufnahmeelement (34, 46) an mindestens einer Innenumfangsfläche des Seitenabschnitts (22) des Reifenrahmenelements (12) befestigt ist.

## Revendications

1. Bandage pneumatique (10, 40) comprenant :
un élément d'armature pneumatique (12) formé dans une forme circulaire et fait à partir d'une résine ; et
une couche d'étanchéité fournie en fixant un élément de boîtier étanche (34, 36) dont l'intérieur est rempli d'un matériau d'étanchéité (38) à une surface circonférentielle intérieure de l'élément d'armature de pneumatique (12), **caractérisé en ce que**
la résine est une résine thermoplastique ou un élastomère thermoplastique.

2. Bandage pneumatique (10, 40) selon la revendication 1, comprenant en outre une partie de fixation (42, 43, 44) prévue au niveau de la surface circonférentielle intérieure de l'élément d'armature de pneumatique (12) et à laquelle est fixé l'élément de boîtier étanche (34, 36).

3. Bandage pneumatique (10, 40) selon la revendication 1 ou la revendication 2, dans lequel :
l'élément d'armature de pneumatique (12) inclut une partie de talon (20) couvrant une tringle de talon (26), une partie latérale (22) s'étendant depuis la partie de talon (20) vers un côté extérieur du pneumatique en direction radiale, et une partie de couronne (24) s'étendant depuis la partie latérale (22) vers un côté intérieur du pneumatique dans le sens de la largeur; et
l'élément de boîtier étanche (34, 36) est fixé à au moins une surface circonférentielle intérieure de la partie latérale (22) de l'élément d'armature de pneumatique (12).
